# DEMANDE DE BREVET EUROPEEN

(11) **EP 1 802 159 A1**
(43) Date de publication de la demande: **27.06.2007**
(21) Numéro de dépôt: 06126210.1
(22) Date de dépôt: 15.12.2006
(51) Int. Cl.: H04Q 7/38

(54) **Procédé de configuration d'un terminal mobile en fonction de sa position géographique, et terminal le mettant en oeuvre**

(30) Priorité: 21.12.2005 FR 0513020
(71) Demandeur: Alcatel Lucent, 75008 Paris (FR)
(72) Inventeur: Gonguet, Arnaud, 75013, PARIS (FR); Delegue, Gèrard, 94230, CACHAN (FR); Betge-Brezetz, Stéphane, 75015, PARIS (FR); Saidi, Mohamed Adel, 92160, ANTONY (FR); Fournigault, Lionel, 91190, GIF SUR YVETTE (FR)
(74) Mandataire: Chaffraix, Sylvain

(57) **Abrégé**

Procédé de configuration d'un terminal mobile (10) dans un réseau (20) de télécommunication en fonction de la position géographique de ce terminal mobile (10), le réseau (20) étant divisé en cellules géographiques correspondant chacune à la couverture d'une station de base destinée à échanger des données avec le terminal mobile (10) par voie hertzienne, la position de ce terminal mobile (10) étant définie en permanence pendant son fonctionnement par des données de localisation qui sont fonction d'au moins une station de base, le procédé étant du type dans lequel on définit au moins deux zones (Z1,Z2,Z3) géographiques distinctes et au moins une particularité de fonctionnement du terminal mobile (10) propre à chaque zone (Z1,Z2,Z3), caractérisé en ce que :
• on définit géographiquement chaque zone (Z1,Z2,Z3) par des données de localisation qui sont fonction d'un ensemble d'au moins deux stations de base contenue dans la zone (Z1 ,Z2,Z3)),
• on enregistre dans une mémoire de données de localisation (30), située dans le réseau (20), les données de localisation des zones (Z1,Z2,Z3)et dans une mémoire de configuration (32, 12) les particularités de fonctionnement du terminal (10) propres à ces zones (Z1,Z2,Z3)
• on compare les données de localisation du terminal mobile (10) aux données de localisation des zones (Z1,Z2,Z3) pour déduire dans quelle zone (Z1,Z2,Z3) est localisé le terminal mobile (10),
• on applique la particularité de fonctionnement spécifique à une zone (Z1,Z2,Z3) dès que le terminal mobile (10) est localisé dans cette zone.

## Description

La présente invention concerne un procédé de configuration d'un terminal mobile en fonction de sa position géographique. L'invention concerne également un terminal pour mettre en oeuvre ce procédé.

On entend par configuration d'un terminal mobile en fonction de sa position géographique, la particularité du fonctionnement de ce terminal selon un critère géographique.

Un des domaines d'application, non exclusif, de l'invention est celui des terminaux mobiles de radiocommunication fonctionnant dans un système de radiocommunication. L'invention s'applique notamment, mais non exclusivement, à un système ou réseau selon les standards GSM (Groupe spécial Systèmes Mobiles publics de radiocommunication), DCS (Digital Communication System en anglais), PCS (Universal Mobile Telecommunications System en anglais) ou UMTS, ce terminal peut en outre également intégrer les fonctions GPS 1.5GHz (Global Positionning System en anglais) ou Wi-Fi 2.5GHz (Wireless Fidelity en anglais).

De façon classique, un réseau cellulaire de télécommunication de type GSM (Global System for Mobile Communications) comprend un sous-système radio (BSS : Base Station Subsystem) et un sous-système réseau (NSS : Network Subsystem).

Le sous-système radio est destiné à gérer les échanges de données avec les terminaux mobiles par voie hertzienne et comprend à cet effet des stations de base (BTS : Base Transceiver Station) et des contrôleurs de stations de base (BSC : Base Station Controler ).

Le sous-système réseau est destiné à gérer les appels en tenant compte de la mobilité des terminaux et comprend à cet effet des bases de données et des commutateurs de réseau cellulaire (MSC : Mobile Switching Center).

Selon sa position géographique l'utilisateur d'un terminal peut vouloir modifier la configuration de son terminal.

Le problème est de détecter la présence de l'utilisateur du terminal dans un endroit où il veut que son terminal ait une configuration particulière.

On connaît déjà dans l'état de la technique, notamment d'après le document WO 02 071778, un procédé de gestion du fonctionnement d'un terminal mobile de réseau de télécommunication en fonction de la position géographique de ce terminal, le réseau étant divisé en cellules géographiques correspondant chacune à la couverture d'une station de base destinée à échanger des données avec le terminal mobile en fonctionnement par voie hertzienne, la position de ce terminal mobile étant définie en permanence pendant son fonctionnement par des données de localisation qui sont fonction d' une station de base de la cellule dans laquelle est situé le terminal.

Ceci induit le fait que chaque zone doit être centrée sur une station de base et chaque zone doit recouvrir tout ou partie de la cellule de couverture de cette station de base.

Cette solution est donc adaptée pour des zones de taille réduite et cela pose un problème si l'utilisateur requiert une configuration de son terminal pour une zone plus large telle qu'une ville ou un pays.

L'invention a pour but de présenter une solution à ces problèmes.

L'invention, à cet effet, concerne, un procédé de configuration d'un terminal mobile dans un réseau de télécommunication en fonction de la position géographique de ce terminal mobile, le réseau étant divisé en cellules géographiques correspondant chacune à la couverture d'une station de base destinée à échanger des données avec le terminal mobile par voie hertzienne, la position de ce terminal mobile étant définie en permanence pendant son fonctionnement par des données de localisation qui sont fonction d'au moins une station de base, le procédé étant du type dans lequel on définit au moins deux zones géographiques distinctes et au moins une particularité de fonctionnement du terminal mobile propre à chaque zone, caractérisé en ce que :
- on définit géographiquement chaque zone par des données de localisation qui sont fonction d'un ensemble d'au moins deux stations de base contenue dans la zone,
- on enregistre dans une mémoire de données de localisation, située dans le réseau, les données de localisation des zones et dans une mémoire de configuration les particularités de fonctionnement du terminal propres à ces zones,
- on compare les données de localisation du terminal mobile aux données de localisation des zones pour déduire dans quelle zone est localisé le terminal mobile,
- on applique la particularité de fonctionnement spécifique à une zone dès que le terminal mobile est localisé dans cette zone.

Dans un mode de réalisation particulier, l'invention propose également caractérisé en ce que les stations de base contenue dans la zone ont des couvertures cellulaires disjointes.

Suivant un autre aspect, l'invention se rapporte également à un terminal pour la mise en oeuvre du procédé.

Le terminal selon l'invention peut être un radiotéléphone portable, un assistant numérique personnel (personnal digital assistant ou PDA en anglais) et un ordinateur portable.

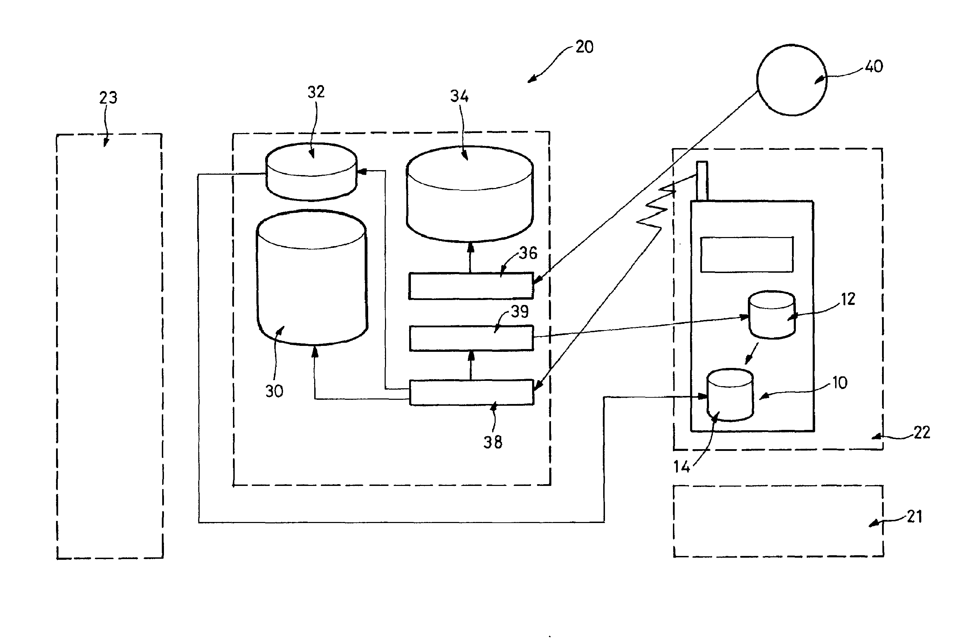

D'autres caractéristiques et avantages de l'invention apparaîtront à la lecture de la description suivante d'un mode de réalisation particulier de l'invention, donné à titre illustratif et pas limitatif, et de la figure unique ci-dessous.

Selon sa position géographique et donc la zone Z1,Z2,Z3 où il se trouve, l'utilisateur d'un terminal 10 peut nécessiter une modification automatique de la configuration de son terminal.

Par exemple :
- A la maison Z1, certains appels entrants peuvent ne pas être acceptés,
- Au travail Z2, la sonnerie du terminal 10 déclenchée par des appels entrants peut être différente de la sonnerie déclenchée lorsque l'utilisateur est dans la zone de sa maison Z1,
- A l'étranger Z3, certains appels entrants peuvent être rejetés pour éviter à l'utilisateur de payer des taxes supplémentaires

Les zones Z1, Z2 ,Z3 sont composées d'au moins deux cellules géographiques correspondant chacune à la couverture d'une station de base.

Ces cellules géographiques peuvent être disjointes, c'est à dire que les couvertures géographiques des stations de base de ces cellules n'ont pas de coordonnées géographiques communes.

L'utilisateur du terminal 10 doit souscrire le service de zone géographique auprès de son opérateur 40.

L'utilisateur du terminal 10 est inscrit dans une base de données utilisateur 34 par l'opérateur 40 via un serveur d'activation de service 36.

Les différentes configurations possibles du terminal 10, soit ses particularités de fonctionnement propres à ces zones Z1, Z2, Z3, peuvent être enregistrées dans une mémoire de configuration 32 dans le réseau 20, et ou aussi dans une mémoire de configuration 12 dans le terminal 10

La mémoire de configuration 32 dans le réseau 20 peut comprendre des configurations différentes liées à la facturation ou aux services accessibles au terminal 10.

La mémoire de configuration 12 dans le terminal 10 peut comprendre des configurations différentes liées à la sonnerie du terminal 10, à son horloge à mettre à jour si la zone Z3 est l'étranger ou encore un fond d'écran selon la zone.

Le terminal 10 a doncaccès aux zones géographiques Z1,Z2,Z3 disponibles enregistrées dans une mémoire des zones géographique 30, située dans le réseau 20.

Le terminal 10 accède à ses données de localisation, soit à la zone géographique courante où il se trouve, en envoyant une requête vers le serveur de recherche de zone 38 qui transmet l'information à un serveur de notification de changement de zone 39.

Les données de localisation du terminal mobile 10 sont comparées aux données des zones Z1, Z2, Z3 de la mémoire des zones géographique 30 pour déduire dans quelle zone Z1, Z2, Z3 est localisé le terminal mobile 10.

Le serveur de notification de changement de zone 39 communique avec la mémoire des zones géographiques 30 et avec l'une ou l'autre des deux mémoires de configuration du réseau et du terminal 32, 12, le cas échéant.

La particularité de fonctionnement spécifique à une zone Z1, Z2, Z3 est appliquée dès que le terminal mobile 10 est localisé dans cette zone. via un configurateur de terminal 14 situé dans le terminal 10.

## Revendications

1. Procédé de configuration d'un terminal mobile (10) dans un réseau (20) de télécommunication en fonction de la position géographique de ce terminal mobile (10), le réseau (20) étant divisé en cellules géographiques correspondant chacune à la couverture d'une station de base destinée à échanger des données avec le terminal mobile (10) par voie hertzienne, la position de ce terminal mobile (10) étant définie en permanence pendant son fonctionnement par des données de localisation qui sont fonction d'au moins une station de base, le procédé étant du type dans lequel on définit au moins deux zones (Z1,Z2,Z3) géographiques distinctes et au moins une particularité de fonctionnement du terminal mobile (10) propre à chaque zone (Z1,Z2,Z3), **caractérisé en ce que** :
• on définit géographiquement chaque zone (Z1,Z2,Z3) par des données de localisation qui sont fonction d'un ensemble d'au moins deux stations de base contenue dans la zone (Z1,Z2,Z3),
• on enregistre dans une mémoire de données de localisation (30), située dans le réseau (20), les données de localisation des zones (Z1,Z2,Z3) et dans une mémoire de configuration (32, 12) les particularités de fonctionnement du terminal (10) propres à ces zones (Z1,Z2,Z3),
• on compare les données de localisation du terminal mobile (10) aux données de localisation des zones (Z1,Z2,Z3) pour déduire dans quelle zone (Z1,Z2,Z3) est localisé le terminal mobile (10),
• on applique la particularité de fonctionnement spécifique à une zone (Z1,Z2,Z3) dès que le terminal mobile (10) est localisé dans cette zone.

2. Procédé selon la revendication 1 **caractérisé en ce que** les stations de base contenue dans la zone (Z1,Z2,Z3) ont des couvertures cellulaires disjointes.

3. Procédé selon la revendication 1 ou 2 **caractérisé en ce que** la mémoire de configuration (32) des particularités de fonctionnement du terminal (10) spécifique à une zone (Z1,Z2,Z3) est située dans le réseau (20).

4. Procédé selon la revendication 1 ou 2 **caractérisé en ce que** la mémoire de configuration (12) des particularités de fonctionnement du terminal (10) spécifique à une zone (Z1,Z2,Z3) est située dans le terminal (10).

5. Terminal **caractérisé en ce qu'**il comporte des moyens pour remplir les fonctions selon l'une des revendications précédentes.
